(19) Europäisches Patentamt
European Patent Office
Office européen des brevets

(11) Numéro de publication : **0 079 258**
**B1**

(12) # FASCICULE DE BREVET EUROPÉEN

(45) Date de publication du fascicule du brevet : **16.04.86**

(51) Int. Cl.⁴ : **C 22 B 60/02**

(21) Numéro de dépôt : **82401895.6**

(22) Date de dépôt : **15.10.82**

(54) **Procédé d'extraction et de séparation de l'uranium, du thorium et des terres rares par traitement de solutions aqueuses de chlorures de ces éléments.**

(30) Priorité : **30.10.81 FR 8120385**

(43) Date de publication de la demande : **18.05.83 Bulletin 83/20**

(45) Mention de la délivrance du brevet : **16.04.86 Bulletin 86/16**

(84) Etats contractants désignés : **BE CH DE FR GB IT LI LU NL SE**

(56) Documents cités :
**FR-A- 1 373 734**
**US-A- 2 848 300**
**US-A- 2 943 923**
**US-A- 3 745 205**
**US-A- 3 804 940**
**JOURNAL OF INORGANIC & NUCLEAR CHEM., vol. 40, juillet 1978, pages 1427-1430, Pergamon Press Ltd., (GB); G.W. MASON et al.: "Extraction of metals by Bis-(2-ethylhexyl) phosphoric acid in 2-ethylhexanoic acid as monomerizing diluent from an aqueous chloride phase: Th(IV) and U(VI)"**
**JOURNAL INORGANIC & NUCLEAR CHEM., vol. 40, juillet 1978, pages 1807-1810, Pergamon Press, (GB); G.W. MASON et al.: "Extraction of U(VI), Th(IV), Am(III) and Eu(III) by bis para-octylphenyl phosphoric acid in benzene diluent"**
**HYDROMETALLURGY, vol. 4, no. 1, janvier 1979, pages 1-20, Amsterdam (NL); I.L. JENKINS: "Solvent extraction chemistry in the atomic energy industry — a review"**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Sabot, Jean-Louis**
**1 Quater avenue Lesage**
**F-78600 Maisons Laffittre (FR)**
Inventeur : **Leveque, Alain**
**8-10, rue Manin**
**F-75019 Paris (FR)**

(74) Mandataire : **Dutruc-Rosset, Marie-Claude et al**
**RHONE POULENC RECHERCHES Service Brevets Chimie et Polymères 25, Quai Paul Doumer**
**F-92408 Courbevoie Cedex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



Jouve, 18, rue St-Denis, 75001 Paris, France

**Description**

La présente invention concerne un procédé d'extraction et de séparation de l'uranium, du thorium et des terres rares par traitement de solutions aqueuses de chlorures de ces différents éléments.

L'uranium, le thorium et les terres rares sont présents à l'état naturel dans des minerais tels que la monazite, la bastnaesite, la xenotime. On les trouve aussi dans diverses solutions d'extraction auxquelles on fait subir une concentration préalable. Afin de récupérer certains de ces éléments, les minerais, après broyage, sont soumis à une attaque alcaline par la soude en autoclave. Les hydroxydes d'uranium, de thorium et de terres rares formés précipitent alors que les phosphates solubles sont éliminés.

Parmi les hydroxydes formés, on trouve également des hydroxydes de métaux divers provenant des métaux contenus dans les minerais de départ tels que fer, titane, calcium.

Les hydroxydes d'uranium, de thorium, de terres rares et éventuellement les hydroxydes de métaux divers sont solubilisés par un acide fort tel que l'acide nitrique ou l'acide chlorhydrique.

Un moyen de séparer l'uranium, le thorium et les différentes terres rares consiste à effectuer des opérations d'extraction liquide-liquide successives à partir de solutions aqueuses de sels desdits éléments.

L'uranium, le thorium ainsi que les différentes terres rares séparés ne peuvent être utilisés dans certaines applications que s'ils ne contiennent qu'un très faible taux d'impuretés et de radioactivité.

Il est déjà connu d'isoler l'uranium, le thorium et les terres rares à partir des solutions nitriques (J. Appln. Chem. 11 March 1961 MENZIES and RIGBY — Solvent extraction of thorium).

Il est décrit dans US-A-3 745 205 un procédé de séparation de l'uranium à partir de solutions chlorhydriques d'actinides, de lamthanides, d'yttrium et de thorium à l'aide d'un extractant organophosphoré acide qui est l'acide (diméthyl-2,6 heptyl-4) phosphorique.

Il est connu selon US-A-2 848 300 un procédé de séparation de l'uranium, des terres rares par extraction à l'aide d'un solvant organique tel qu'un alkylphosphate ou un alkylphosphonate d'une solution aqueuse acide contenant les sels d'uranium et de terres rares : les meilleurs résultats étant obtenus lorsque l'acide utilisé est l'acide nitrique et lorsque sa concentration est forte 3 à 7 N.

Il est connu d'après l'article (Ekstraktsiya-Teoriya, Primenemie, Apparatura, Sb. Statei 1962, No 2, 160-4) d'extraire le thorium de solutions chlorhydriques par un agent d'extraction constitué de diisoamylméthyl phosphonate dilué dans un solvant organique.

Les auteurs de cet article indiquent que le cœfficient d'extraction du thorium augmente avec la concentration en acide chlorhydrique et diminue avec l'augmentation de la concentration en thorium.

Cette conclusion est confirmée par un article paru dans le journal « Fresenius'Z. Anal. Chem. » (1968, 238 — 4 —) où les auteurs extraient et séparent le thorium et le cérium de solutions chlorhydriques au moyen d'un extractant organophosphoré neutre, constitué de tributylphosphate ou de diisoamylméthyl phosphonate en solution dans un diluant organique, le xylène. Les auteurs ont étudié la variation des cœfficients d'extraction respectifs du cérium et de thorium en fonction de la variation de la concentration en acide chlorhydrique. Ils en concluent que pour obtenir une séparation correcte entre le cérium et le thorium, il faut une concentration minimale en acide chlorhydrique dans la solution aqueuse de départ de 6 N.

Il apparaît ainsi que selon ces deux articles, l'extraction et la séparation des deux éléments thorium et cérium à partir de solutions chlorhydriques ne sont pratiquement réalisables que dans le cas où les solutions aqueuses présentent une forte acidité et une concentration en éléments à extraire faible.

Or, les solutions provenant de l'attaque sodique des minerais puis de la dissolution des oxydes par l'acide chlorhydrique sont des solutions neutres ou très faiblement acides (concentration en acide chlorhydrique généralement inférieure à environ 2 N) qui présentent une concentration en éléments à séparer (uranium, thorium, terres rares) élevée.

L'extraction de solutions présentant une concentration élevée en éléments à séparer (uranium, thorium et terres rares), neutres ou très faiblement acides est un problème industriel, en vue de l'obtention de chacun de ces éléments à l'état aussi pur que possible et au moindre coût. En effet, l'uranium, le thorium ou les terres rares ne peuvent être utilisés dans certaines applications que s'ils présentent un taux très faible d'impuretés.

La demanderesse a trouvé que l'on pouvait extraire et séparer l'uranium, le thorium, les terres rares et éventuellement le fer par extraction liquide-liquide entre une phase aqueuse contenant les sels de ces métaux et une phase organique, selon un procédé caractérisé en ce que l'on sépare l'uranium, le thorium et les terres rares à partir d'une solution aqueuse de chlorures d'uranium, de thorium, de terres rares et éventuellement de fer contenant au minimum 30 % en poids de terres rares présentant une acidité inférieure à 2 N et une concentration totale exprimée en oxydes d'uranium, de thorium et de terres rares d'au moins 50 g/l, par mise en contact de ladite solution aqueuse avec une phase organique contenant un agent d'extraction qui est constitué par au moins un composé organophosphoré neutre éventuellement en solution dans un diluant selon un procédé qui consiste :

— soit dans une première étape à extraire en phase organique les chlorures d'uranium et de thorium et à laisser en phase aqueuse les chlorures de terres rares : ledit agent d'extraction étant choisi parmi les phosphonates, les phosphinates, les oxydes de phosphine seuls, en mélange entre eux, ou en mélange

avec des phosphates organiques neutres ; puis dans une autre étape à séparer le thorium et l'uranium de la phase organique

— soit dans une première étape à extraire en phase organique les chlorures d'uranium et à laisser en phase aqueuse les chlorures de terres rares et de thorium : ledit agent d'extraction étant choisi parmi les phosphates organiques neutres, les phosphonates, les phosphinates et les oxydes de phosphine seuls ou en mélange ; puis dans une autre étape à extraire en phase organique les chlorures de thorium et à laisser en phase aqueuse les chlorures de terres rares : ledit agent d'extraction étant choisi parmi les phosphonates, les phosphinates, les oxydes de phosphine, seuls, en mélange entre eux ou en mélange avec des phosphates organiques neutres.

Le procédé de l'invention tel que décrit ci-dessus permet une application industrielle économiquement intéressante avec obtention de produits purs à un coût bien inférieur aux produits obtenus par toutes les techniques actuellement connues.

Les solutions à traiter provenant de la redissolution par l'acide chlorhydrique des oxydes obtenus à la suite de l'attaque alcaline sont constituées essentiellement de chlorures d'uranium, de thorium et de terres rares mais elles comportent souvent des chlorures d'éléments divers tels que le fer.

Le fer élément souvent présent en quantité non négligeable et dépendante des minerais de départ doit être dans certains cas éliminé.

Lorsque le fer représente plus de 5 % en poids de la quantité d'uranium, il est nécessaire de l'éliminer afin d'obtenir des solutions d'uranium suffisamment pures pour une application industrielle. Cette élimination fait l'objet d'une variante du procédé de réalisation.

Selon l'invention, la concentration en poids en oxydes de terres rares de la solution aqueuse de départ doit être comprise entre 30 et 100 %, la concentration d'oxyde de thorium doit être inférieure à 30 % et la concentration d'oxyde d'uranium doit être inférieure à 70 %.

Lorsque selon l'invention, la solution aqueuse de chlorures comprend des traces de thorium (inférieures à 1 % en poids), la concentration en oxydes de terres rares doit être d'au moins 30 %.

Lorsque la solution aqueuse est « pauvre » en thorium et contient une quantité d'oxyde de thorium inférieure à 5 %, il est préférable d'utiliser une solution contenant une concentration en oxydes de terres rares d'au moins 40 % en poids.

Lorsque la solution aqueuse est « riche » en thorium, et contient une quantité d'oxyde de thorium comprise entre 5 et 30 %, il est particulièrement intéressant d'utiliser une solution contenant une concentration en oxydes de terres rares d'au moins 50 % en poids et plus particulièrement d'au moins 70 %.

Le procédé d'extraction liquide-liquide s'applique tout particulièrement à l'extraction de solutions aqueuses de chlorures d'uranium, de thorium et de terres rares contenant au moins 30 % de terres rares en poids, présentant une acidité inférieure ou égale à 2N et de préférence à 1N et une concentration totale exprimée en oxydes totaux compris entre 50 g/l et 600 g/l.

L'extraction est réalisée au moyen d'un extractant organophosphoré neutre substantiellement insoluble dans l'eau et choisi parmi les quatres classes suivantes :

Les phosphates organiques neutres 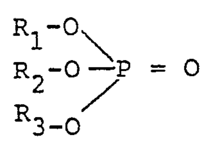

Les phosphonates 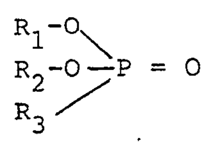

Les phosphinates 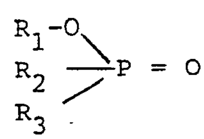

Les oxydes de phosphine 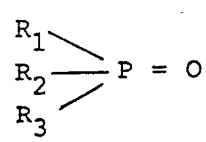

dans lesquelles $R_1$, $R_2$ et $R_3$ représentent des radicaux hydrocarbonés aromatiques et/ou aliphatiques ayant entre 1 et 18 atomes de carbone et, dans lesquelles au moins un groupe R comprend de 4 à 15 atomes de carbone.

Parmi ces composés, on met notamment en œuvre selon l'invention, ceux qui sont disponibles

industriellement comme le tri-n-butylphosphate (TBP), le tri-isobutylphosphate (TIBP), le dibutylbutylphosphonate (DBBP), le di-2 éthylhexyl-2 éthylhexylphosphonate (DEHEHP), l'oxyde de tri-octylphosphine (TOPO).

Les agents d'extraction peuvent être utilisés à l'état pur ou en solution dans un diluant.

Les diluants pouvant être utilisés sont ceux habituellement mis en œuvre pour réaliser des opérations d'extraction liquide-liquide. Parmi ceux-ci, on peut citer les composés aliphatiques, comme par exemple, l'hexane, l'heptane, le dodécane, et les coupes pétrolières du type kérosène ; les composés aromatiques comme, par exemple, le benzène, le toluène, l'éthylbenzène, le xylène et les coupes du type Solvesso (marque déposée par la Société Exxon) et enfin les dérivés halogénés comme, par exemple, le chloroforme, et le tétrachlorure de carbone.

Les concentrations en agents organophosphorés varient avec l'agent d'extraction dans de larges limites.

Les concentrations peuvent varier de 5 % en volume lorsque l'agent d'extraction est en solution dans un diluant jusqu'à environ 100 % lorsque l'agent est utilisé pur.

Les extractions seront facilitées et la concentration en agent organophosphoré nécessaire sera diminuée dans l'ordre de mise en œuvre suivant : phosphates organiques neutres, phosphonates, phosphinates, oxydes de phosphines.

Les agents d'extraction peuvent être utilisés seuls ou en mélanges.

Toutes les combinaisons ainsi que tous les mélanges de composés organophosphorés neutres sont possibles. Pour chacun des mélanges de composés organophosphorés, on obtient pour un élément déterminé à extraire, une gamme de cœfficients d'extraction et de capacité d'extraction intermédiaire à ceux obtenus avec chacun des éléments du mélange utilisé seul.

Il est ainsi possible de formuler vis-à-vis de chacun des éléments à extraire (uranium, thorium ou terres rares) un mélange d'extractants permettant de séparer un élément par rapport aux autres.

Il apparaît ainsi que selon le choix et la concentration du ou des extractants, on pourra séparer un élément des deux autres avec des taux d'impuretés extrêmement faibles.

Dans le cas où selon l'invention, on cherche à séparer l'uranium, le thorium et les terres rares à partir d'une solution chlorhydrique de ces éléments, on peut choisir un mélange d'extractant permettant d'extraire dans une première étape l'uranium en solution organique tout en conservant le thorium et les terres rares en solution aqueuse, ces deux derniers éléments étant séparés dans une étape ultérieure soit à l'aide du même mélange d'extractant mais utilisé à une concentration différente soit à l'aide d'un ou plusieurs extractants différents.

Lorsque l'on cherche à extraire les terres rares d'une solution contenant du thorium (l'uranium ayant été préalablement éliminé) ou d'une solution contenant du thorium et de l'uranium et éventuellement du fer, on utilise de préférence au moins un des extractants choisis parmi les classes suivantes : phosphonates, phosphinates, oxydes de phosphine. Ces extractants peuvent alors être utilisés seuls, en mélange entre eux ou en mélange avec des phosphates organiques neutres.

La concentration en éléments à extraire, uranium, thorium et terres rares joue aussi un rôle important dans les mécanismes de l'extraction.

L'extraction au niveau industriel des différents éléments (uranium, thorium, terres rares) est facilitée au fur et à mesure qu'augmente le nombre de liaison Carbone-Phosphore ou respectivement avec la polarité du groupe phosphoryl PO de l'extractant.

Ainsi la séparation au niveau industriel avec les agents d'extraction comportant le moins de liaison Carbone-Phosphore tels que les phosphates organiques neutres ne pourra être réalisée que pour des concentrations totales exprimées en oxydes d'éléments à extraire (uranium, thorium, terres rares) d'au moins 250 g/l alors qu'avec des agents d'extraction possédant un groupe phosphoryl beaucoup plus polaire tels que les oxydes de phosphine, la concentration minimale nécessaire sera de 50 g/l.

Selon l'invention, deux modes de mise en œuvre particuliers peuvent notamment être utilisés.

Selon un premier mode de mise en œuvre, on peut procéder à l'extraction et à la séparation de l'uranium, du thorium et des terres rares par extraction liquide-liquide entre une phase aqueuse contenant les sels de ces métaux et une phase organique contenant un composé organophosphoré neutre en procédant de la manière suivante :

— dans une première étape, dans le but de récupérer les terres rares, on met en contact la solution aqueuse de chlorures d'uranium, de thorium, de terres rares contenant au moins 30 % de terres rares en poids, présentant une acidité inférieure à 2N et une concentration exprimée en oxydes totaux supérieure à 50 g/l avec une phase organique constituée d'un diluant et d'un agent d'extraction de façon à extraire en phase organique les chlorures d'uranium, de thorium et à laisser en phase aqueuse les chlorures de terres rares : ledit agent d'extraction étant choisi parmi les phosphonates, les phosphinates, les oxydes de phosphine seuls, en mélange entre eux, ou en mélange avec des phosphates organiques neutres ;

— dans une deuxième étape, dans le but de récupérer le thorium on met en contact la phase organique issue de la première étape avec de l'eau ou une solution d'acide chlorhydrique diluée de façon à extraire le thorium en solution aqueuse et à laisser l'uranium en solution organique ;

— dans une troisième étape, dans le but de récupérer l'uranium, on met en contact la phase organique issue de la deuxième étape avec de l'eau ou une solution aqueuse de carbonate alcalin de façon à extraire l'uranium en solution aqueuse.

Lorsque le minerai de départ contient une quantité trop importante de fer, une variante du premier mode de mise en œuvre peut être utilisée.

La phase organique issue de la première étape contenant l'uranium, le thorium et le fer est lavée avec une solution d'acide nitrique, présentant une concentration comprise entre 1 et 4N afin d'éliminer le fer sous forme de nitrate ferrique.

La deuxième étape, dans le but de récupérer le thorium est réalisée à partir de la phase organique débarrassée du fer qui est mise en contact avec une solution d'acide nitrique diluée afin de récupérer le thorium en solution aqueuse.

Les étapes suivantes sont réalisées suivant le premier mode de mise en œuvre décrit préalablement.

Plus particulièrement, il peut être avantageux d'utiliser lors de :

— la deuxième étape, de l'eau ou de l'acide chlorhydrique de concentration inférieure ou égale à 0,1 M ;

— la troisième étape, une solution aqueuse de carbonate alcalin de concentration comprise entre 0,5 et 2M.

Selon un deuxième mode de mise en œuvre, on peut procéder à l'extraction et à la séparation de l'uranium, du thorium et des terres rares par extraction liquide-liquide entre une phase aqueuse contenant les sels de ces métaux et une phase organique contenant un composé organophosphoré neutre et procédant de la manière suivante :

— dans une première étape, dans le but de séparer d'un côté les terres rares-thorium et d'un autre côté l'uranium, on met en contact la solution aqueuse chlorures d'uranium, de thorium, de terres rares contenant au moins 30 % d'oxydes de terres rares, présentant une acidité inférieure à 2N et une concentration exprimée en oxydes totaux d'au moins 50 g/l, avec une phase organique constituée d'un diluant et d'un agent d'extraction de façon à extraire en phase organique les chlorures d'uranium et à laisser en phase aqueuse les chlorures de thorium et de terres rares : ledit agent d'extraction étant choisi parmi les phosphates organiques neutres, les phosphonates, les phosphinates, les oxydes de phosphine, seuls, ou en mélange ;

— dans une deuxième étape, dans le but de récupérer l'uranium, on met en contact la phase organique issue de la première étape avec de l'eau ou une solution de carbonate alcalin de façon à extraire l'uranium en solution aqueuse ;

— dans une troisième étape, dans le but de récupérer les terres rares, on met en contact la phase aqueuse issue de la première étape contenant le thorium et les terres rares avec une phase organique constituée d'un diluant et d'un agent d'extraction de façon à extraire en phase organique le thorium et à laisser en phase aqueuse les terres rares : ledit agent d'extraction étant choisi parmi les phosphonates, les phosphinates, les oxydes de phosphine, seuls, en mélange entre eux ou en mélange avec les phosphates organiques neutres ;

— dans une quatrième étape, dans le but de récupérer le thorium, on met en contact la phase organique issue de la troisième étape avec de l'eau ou avec une solution chlorhydrique de façon à extraire le thorium en solution aqueuse.

Lorsque le minerai de départ contient une quantité trop importante de fer, une variante du deuxième mode de mise en œuvre peut être utilisée. La phase organique issue de la première étape contenant l'uranium et le fer est lavée avec une solution d'acide nitrique présentant une concentration comprise entre 1 et 4N afin d'éliminer le fer sous forme de nitrate ferrique.

Les étapes suivantes sont réalisées suivant le deuxième mode de mise en œuvre décrit préalablement.

Plus particulièrement, il peut être avantageux d'utiliser lors de :

— la deuxième étape, une solution de carbonate alcalin de concentration comprise entre 0,5 et 2M ;

— la quatrième étape, de l'eau ou une solution d'acide chlorhydrique de concentration inférieure à 0,1M.

Les diverses étapes de mises en contact et de lavage peuvent être réalisées dans des dispositifs classiques d'extraction liquide-liquide fonctionnant à contre-courant. De tels dispositifs comprennent généralement plusieurs étages de systèmes mélangeurs-décanteurs ou de colonnes garnies et/ou agitées, agencés pour réaliser des opérations d'extraction, de lavage sélectif et de récupération des éléments en phase aqueuse et de régénération de l'agent d'extraction.

Les diverses étapes sont réalisées selon les conditions opératoires classiques utilisées en extraction liquide-liquide, les températures de réalisation sont habituellement comprises entre la température ambiante et 80 °C, de préférence entre la température ambiante et 70 °C.

Les débits respectifs de phase organique et de phase aqueuse devant être présentes résultent de la combinaison de différents paramètres selon des modes de calculs bien connus de l'homme de l'art.

Les exemples suivants sont donnés à titre indicatif et ne peuvent être considérés comme une limite du domaine et de l'esprit de l'invention.

## Exemple 1

L'exemple suivant a été réalisé suivant le premier mode de mise en œuvre dans une installation comprenant :

— une première batterie d'extraction liquide-liquide fonctionnant à contre-courant, constituée d'une section d'extraction (a) comportant 6 étages théoriques et d'une section de lavage (a') comportant 8 étages théoriques ;

— une section de régénération-récupération (b) comportant 4 étages théoriques ;

— une deuxième batterie d'extraction liquide-liquide fonctionnant à contre-courant constituée d'une section d'extraction (c) comportant 6 étages théoriques et d'une section de lavage (c') comportant 6 étages théoriques ;

— une section de régénération-récupération (d) comportant 2 étages théoriques.

La solution chlorhydrique de départ présente une acidité de 0,5N et une concentration en oxydes totaux de 340 g/l répartie de la façon suivante :

| | |
|---|---|
| oxydes de terres rares | 310 g/l (soit 91 %) |
| oxyde de thorium | 30 g/l (soit 9 %) |
| oxyde d'uranium | 1 g/l |
| oxyde de fer | 1 g/l |

On choisit comme entrée et sortie des unités d'extraction et de régénération-récupération le sens de circulation de la phase organique.

Dans une première étape :

On introduit avec un débit de 130 l/h en sortie de l'unité d'extraction (a) la solution de chlorures ; en entrée de la même unité d'extraction (a), on introduit avec un débit de 78 l/h une solution composée d'un mélange en poids de dibutylbutylphosphonate à 75 % et d'oxyde de trioctylphosphine à 4 % dans du kérosène.

On introduit avec un débit de 13 l/h dans l'unité de lavage (a') une solution molaire d'acide chlorhydrique.

On recueille à l'entrée de l'unité d'extraction (a) une solution aqueuse contenant 282 g/l d'oxydes de terres rares, ce qui correspond à un rendement d'extraction supérieur à 99,9 %, moins de 1 mg/l d'oxyde d'uranium et moins de 5 mg/l d'oxyde de thorium. La limite de détection des appareils d'analyses ne permet pas d'obtenir une limite inférieure dans le dosage de l'uranium et du thorium.

La solution organique de dibutyl-butylphosphonate et d'oxyde de trioctylphosphine provenant de la section de lavage (a') est introduite toujours au même débit (78 l/h) dans la section de régénération-récupération (b) à contre-courant avec une solution d'acide nitrique 2M qui elle est introduite avec un débit de 65 l/h.

On recueille en entrée de la section de régénération-récupération (b) une solution aqueuse contenant 2 g/l de fer et contenant moins de 1 mg/l d'uranium.

Dans une deuxième étape :

La solution organique provenant de la section de régénération-récupération (b) est introduite dans la section d'extraction (c) de la deuxième batterie avec un débit toujours constant de 78 l/h. Dans cette même section d'extraction (c) est introduite avec un débit de 26 l/h une solution de dibutyl-butylphosphonate et d'oxyde de trioctylphosphine de même composition que la précédente et provenant de la sortie de la section de régénération-récupération (d). Dans la section de lavage (c') de la même batterie est introduite avec un débit de 130 l/h une solution 0,1M d'acide nitrique.

On recueille en entrée de la section d'extraction (c) une solution aqueuse d'oxyde de thorium présentant une concentration de 30 g/l et contenant moins de 1 mg/l d'uranium et moins de 1 mg/l d'oxydes de terres rares.

Dans une troisième étape :

La solution organique provenant de la section de lavage (c') est introduite dans la section de régénération-récupération (d) avec un débit de 104 l/h. A contre-courant de cette même unité est introduite une solution de carbonate de sodium molaire avec un débit de 26 l/h.

On recueille en entrée de la section de régénération-récupération (d) une solution aqueuse d'uranium présentant une concentration de 5 g/l et moins de 5 mg/l d'oxyde de thorium.

La solution organique issue de cette unité de régénération-récupération est recyclée en partie vers la première batterie section (a) avec un débit de 78 l/h et en partie vers la deuxième batterie section (c) avec un débit de 26 l/h.

Exemple 2

Cet exemple a été réalisé en suivant le deuxième mode de mise en œuvre dans une installation comprenant :

— une première batterie d'extraction liquide-liquide fonctionnant à contre-courant, constituée d'une section d'extraction (a) comportant 4 étages théoriques et d'une section de lavage (a') comportant 5 étages théoriques,

— une première section de régénération-récupération (b) comportant 4 étages théoriques,

— une deuxième section de régénération-récupération (c) comportant 2 étages théoriques,

— un évaporateur pour concentrer la solution aqueuse issue de (a),

— une deuxième batterie d'extraction constituée d'une section d'extraction (d) comportant 6 étages théoriques et d'une section de lavage (d') comportant 8 étages théoriques,

— une troisième section de régénération-récupération (e) comportant 6 étages théoriques.

La solution de chlorures d'éléments à extraire présente une acidité de 0,5N et une concentration en oxydes totaux de 250 g/l répartie de la façon suivante :

| | |
|---|---|
| oxydes de terres rares | 225 g/l (soit 90 %) |
| oxyde de thorium | 25 g/l (soit 10 %) |
| oxyde d'uranium | 1 g/l |
| oxyde de fer | 1 g/l |

Dans une première étape :

On introduit avec un débit de 320 l/h en sortie de l'unité d'extraction (a) la solution de chlorures ; on introduit en entrée de (a) une solution de dibutyl-butylphosphonate 55 % en poids dans du kérosène avec un débit de 64 l/h.

On introduit avec un débit de 16 l/h dans l'unité de lavage (a') une solution 0,05M d'acide chlorhydrique.

On recueille à l'entrée de l'unité d'extraction (a) une solution aqueuse contenant le thorium et les terres rares et ayant une concentration de 240 g/l. Cette solution est concentrée jusqu'à 310 g/l.

La solution organique de dibutyl-butylphosphonate dans le kérosène provenant de l'unité de lavage (a') est introduite dans l'unité de régénération-récupération (b) à contre-courant avec une solution d'acide nitrique 2M qui elle est introduite avec un débit de 32 l/h.

On recueille à l'entrée de l'unité (b) une solution nitrique de fer à 10 g/l contenant moins de 1 mg/l d'uranium.

Dans une deuxième étape :

La solution organique provenant de la section de régénération-récupération (b) est introduite toujours au même débit 64 l/h dans la section de régénération-récupération (c) à contre-courant avec une solution aqueuse de carbonate de sodium molaire qui est introduite avec un débit de 64 l/h.

On recueille en entrée de la section de régénération-récupération (c) une solution aqueuse de carbonate d'uranyle à 5 g/l contenant moins de 5 mg/l de thorium.

La solution organique de dibutyl-butylphosphonate provenant de la section de régénération-récupération (c) est recyclée toujours au même débit vers la section d'extraction (a).

Dans une troisième étape :

La solution aqueuse de thorium et de terres rares qui a été concentrée est introduite avec un débit de 224 l/h en sortie de l'unité d'extraction (d) à contre-courant avec une solution d'un mélange en poids de dibutyl-butylphosphonate à 75 % et d'oxyde de trioctylphosphine à 4 % dans du kérosène qui est introduite avec un débit de 128 l/h.

On introduit avec un débit 13 l/h dans l'unité de lavage (d') une solution molaire d'acide chlorhydrique.

On recueille à l'entrée de l'unité d'extraction (d) une solution aqueuse contenant 292 g/l d'oxydes de terres rares (ce qui correspond à un rendement de 99,9 %) et contenant moins de 1 mg/l d'uranium et moins de 3 mg/l de thorium.

Dans une quatrième étape :

La solution organique issue de l'unité de lavage (d') est introduite dans l'unité de régénération-récupération (e) à contre-courant avec une solution d'acide chlorhydrique 0,2M qui est introduite avec un débit de 112 l/h.

On recueille à l'entrée de l'unité de régénération-récupération (e) une solution aqueuse contenant 60 g/l d'oxyde de thorium, moins de 1 mg/l d'uranium et moins de 1 mg/l de terres rares.

La solution organique de dibutyl-butylphosphonate et d'oxyde de trioctylphosphine provenant de la section de régénération-récupération (e) est recyclée toujours au même débit vers la section d'extraction (d).

Exemple 3

Cet exemple a été réalisé en suivant le deuxième mode de mise en œuvre dans une installation comprenant :

— une première batterie d'extraction liquide-liquide fonctionnant à contre-courant, constituée d'une section d'extraction (a) comportant 5 étages théoriques et d'une section de lavage (a') comportant 4 étages théoriques ;

— une section de régénération-récupération (b) comportant 4 étages théoriques ;

— un évaporateur pour concentrer la solution aqueuse issue de (a) ;

— une deuxième batterie d'extraction constituée d'une section d'extraction (c) comportant 6 étages théoriques et d'une section de lavage (c') comportant 6 étages théoriques ;

— une section de régénération-récupération (d) comportant 4 étages théoriques.

La solution de chlorures à extraire, obtenue par lixiviation à l'acide chlorhydrique d'un concentré

d'uranium, de thorium et de terres rares, présente une acidité de 0,4N et une concentration en oxydes totaux de 250 g/l répartie de la façon suivante :

| | |
|---|---|
| oxydes de terres rares | 225 g/l (soit 90 %) |
| oxyde de thorium | 1 g/l (soit 0,4 %) |
| oxyde d'uranium | 25 g/l |

Dans une première étape :

On introduit avec un débit de 500 l/h en sortie de l'unité d'extraction (a) la solution de chlorures à séparer, on introduit en entrée de (a) une solution de tributylphosphate à 50 % en poids dans du kérosène avec un débit de 250 l/h.

On introduit avec un débit de 50 l/h dans l'unité de lavage (a') une solution 0,1M d'acide chlorhydrique.

On recueille à l'entrée de l'unité d'extraction (a) une solution aqueuse contenant le thorium et les terres rares et ayant une concentration de 200 g/l. Cette solution est concentrée jusqu'à 350 g/l.

Dans une deuxième étape :

La solution organique de tributylphosphate dans le kérosène provenant de l'unité de lavage (a') est introduite dans l'unité de régénération-récupération (b) à contre-courant avec de l'eau qui est introduite avec un débit de 250 l/h.

On recueille en entrée de la section de régénération-récupération (b) une solution aqueuse d'uranium à 50 g/l contenant moins de 1 mg/l d'oxydes de terres rares.

La solution organique de tributylphosphate provenant de la section de régénération-récupération (b) est recyclée toujours au même débit vers la section d'extraction (a).

Dans une troisième étape :

La solution aqueuse de thorium et de terres rares qui a été concentrée est introduite avec un débit de 300 l/h en sortie de l'unité d'extraction (c) à contre-courant avec une solution d'un mélange en poids de dibutyl-butylphosphonate à 75 % et d'oxyde de trioctylphosphine à 4 % dans du kérosène qui est introduite avec un débit de 350 l/h.

On introduit avec un débit de 25 l/h dans l'unité de lavage (c') une solution molaire d'acide chlorhydrique.

On recueille à l'entrée de l'unité d'extraction (c) une solution aqueuse contenant 315 g/l d'oxydes de terres rares et contenant moins de 3 mg/l d'uranium.

Dans une quatrième étape :

La solution organique issue de l'unité de lavage (c') est introduite dans l'unité de régénération-récupération (d) à contre-courant avec une solution d'acide chlorhydrique 0,2M qui est introduite avec un débit de 35 l/h.

On recueille à l'entrée de l'unité de régénération-récupération (d) une solution aqueuse contenant 17,5 g/l d'oxyde de thorium.

La solution organique de dibutyl-butylphosphonate et d'oxyde de trioctylphosphine provenant de la section de régénération-récupération (d) est recyclée toujours au même débit vers la section d'extraction (c).

## Exemple 4

Cet exemple a été réalisé en suivant le deuxième mode de mise en œuvre dans l'installation identique à celle décrite dans l'exemple 3 et comprenant :

— une première batterie d'extraction liquide-liquide fonctionnant à contre-courant, constituée d'une section d'extraction (a) comportant 4 étages théoriques et d'une section de lavage (a') comportant 4 étages théoriques ;

— une section de régénération-récupération (b) comportant 2 étages théoriques ;

— un évaporateur pour concentrer la solution aqueuse issue de (a) ;

— une deuxième batterie d'extraction constituée d'une section d'extraction (c) comportant 6 étages théoriques et d'une section de lavage (c') comportant 6 étages théoriques ;

— une section de régénération-récupération (d) comportant 6 étages théoriques.

La solution de chlorures d'éléments à extraire présente une acidité d'environ 2N et une concentration en oxydes totaux de 50,5 g/l répartie de la façon suivante :

| | |
|---|---|
| oxydes de terres rares | 20 g/l (soit 40 %) |
| oxyde de thorium | 0,5 g/l (soit 1 %) |
| oxyde d'uranium | 30 g/l (soit 59 %) |

Les deux premières étapes de cet exemple sont réalisées à une température de 50 °C, les deux dernières étapes sont réalisées à la température ambiante.

Dans une première étape :

On introduit avec un débit de 1 000 l/h en sortie de l'unité d'extraction (a) la solution de chlorures à

séparer, on introduit en entrée de (a) une solution d'oxyde de trioctylphosphine à 20 % en poids dans du kérosène avec un débit de 1 000 l/h.

On introduit avec un débit de 100 l/h dans l'unité de lavage (a') une solution 0,05M d'acide chlorhydrique.

On recueille à l'entrée de l'unité d'extraction (a) une solution aqueuse contenant le thorium et les terres rares et ayant une concentration de 18 g/l. Cette solution est concentrée jusqu'à 370 g/l.

Dans une deuxième étape :

La solution organique d'oxyde de trioctylphosphine dans le kérosène provenant de l'unité de lavage (a') est introduite dans l'unité de régénération-récupération (b) à contre-courant avec une solution molaire de carbonate de sodium qui est introduite avec un débit de 3 000 l/h.

On recueille en entrée de la section de régénération-récupération (b) une solution aqueuse de carbonate d'uranyle à 10 g/l.

La solution organique de trioctylphosphine provenant de la section de régénération-récupération (b) est recyclée toujours au même débit vers la section d'extraction (a).

Dans une troisième étape :

La solution aqueuse de thorium et de terres rares qui a été concentrée est introduite avec un débit de 50 l/h en sortie de l'unité d'extraction (c) à contre-courant avec une solution d'un mélange en poids de dibutyl-butylphosphonate à 75 % et d'oxyde de trioctylphosphine à 4 % dans du kérosène qui est introduite avec un débit de 50 l/h.

On introduit avec un débit de 5 l/h dans l'unité de lavage (c') une solution molaire d'acide chlorhydrique.

On recueille à l'entrée de l'unité d'extraction (c) une solution aqueuse contenant 330 g/l d'oxydes de terres rares (ce qui correspond à un rendement d'extraction de 99,9 %).

Dans une quatrième étape :

La solution organique issue de l'unité de lavage (c') est introduite dans l'unité de régénération-récupération (d) à contre-courant avec une solution d'acide chlorhydrique 0,2M.

On recueille à l'entrée de l'unité de régénération-récupération (d) une solution aqueuse contenant 25 g/l d'oxyde de thorium.

La solution organique de dibutyl-butylphosphonate et d'oxyde de trioctylphosphine provenent de la section de régénération-récupération (d) est recyclée toujours au même débit vers la section d'extraction (c).

## Revendications

1. Procédé de séparation et de récupération de l'uranium, du thorium, des terres rares et éventuellement du fer par extraction liquide-liquide entre une phase aqueuse contenant les sels de ces métaux et une phase organique caractérisé en ce que l'on sépare l'uranium, le thorium et les terres rares à partir d'une solution aqueuse de chlorures d'uranium, de thorium, de terres rares et éventuellement de fer contenant au minimum 30 % en poids de terres rares présentant une acidité inférieure à 2N et une concentration totale exprimée en oxydes d'uranium, de thorium et de terres rares d'au moins 50 g/l par mise en contact de ladite solution aqueuse avec une phase organique contenant un agent d'extraction qui est constitué par au moins un composé organo-phosphoré neutre éventuellement en solution dans un diluant selon un procédé qui consiste :

— soit dans une première étape à extraire en phase organique les chlorures d'uranium et de thorium et à laisser en phase aqueuse les chlorures de terres rares : ledit agent d'extraction étant choisi parmi les phosphonates, les phosphinates, les oxydes de phosphine seuls, en mélange entre eux, ou en mélange avec des phosphates organiques neutres ; puis dans une autre étape à séparer le thorium et l'uranium de la phase organique,

— soit dans une première étape à extraire en phase organique les chlorures d'uranium et à laisser en phase aqueuse les chlorures de terres rares et de thorium : ledit agent d'extraction étant choisi parmi les phosphates organiques neutres, les phosphonates, les phosphinates et les oxydes de phosphine seuls ou en mélange ; puis dans une autre étape à extraire en phase organique les chlorures de thorium et à laisser en phase aqueuse les chlorures de terres rares : ledit agent d'extraction étant choisi parmi les phosphonates, les phosphinates, les oxydes de phosphine, seuls, en mélange entre eux ou en mélange avec des phosphates organiques neutres.

2. Procédé selon la revendication 1, caractérisé en ce que la solution aqueuse de chlorures d'uranium, de thorium, de terres rares et éventuellement de fer présente une acidité inférieure à 1N.

3. Procédé selon la revendication 1, caractérisé en ce que la solution aqueuse de chlorures d'uranium, de thorium, de terres rares et éventuellement de fer présente une concentration exprimée en oxydes d'uranium, de thorium et de terres rares comprise entre 50 g/l et 600 g/l.

4. Procédé selon la revendication 1, caractérisé en ce que l'agent d'extraction est choisi parmi au moins une des classes d'agents organophosphorés neutres suivantes :

(Voir dessin p. 10)

Phosphates organiques neutres 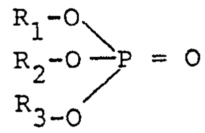

Phosphonates 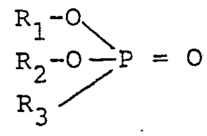

Phosphinates 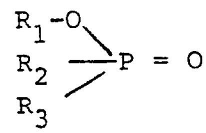

Oxydes de phosphine 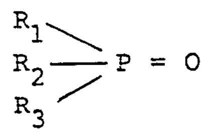

dans lesquelles $R_1$, $R_2$ et $R_3$ représentent des radicaux hydrocarbonés aromatiques et/ou aliphatiques ayant de 1 à 18 atomes de carbone et dans lesquelles au moins un groupe R comprend au moins 4 atomes de carbone.

5. Procédé selon la revendication 4 caractérisé en ce que les radicaux $R_1$, $R_2$ et $R_3$ représentent des radicaux hydrocarbonés aromatiques et/ou aliphatiques dans lesquels au moins un groupe R comprend de 4 à 15 atomes de carbone.

6. Procédé selon la revendication 4 caractérisé en ce que les composés organophosphorés sont choisis parmi les phosphonates, les phosphinates et les oxydes de phosphines.

7. Procédé selon les revendications 4 à 6, caractérisé en ce que le composé organophosphoré neutre est choisi parmi le tri-n-butylphosphate (TBP), le tri-isobutylphosphate (TIBP), le dibutyl-butylphosphonate (DBBP), le di-2-éthylhexyl-2 éthylhexylphosphonate (DEHEHP), l'oxyde de tri-octylphosphine (TOPO).

8. Procédé selon la revendication 1, caractérisé en ce que le diluant est choisi parmi les solvants des composés organophosphorés tels que : hydrocarbure aliphatique, coupe pétrolière du type kérosène ou solvesso, hydrocarbure aromatique, hydrocarbure aliphatique halogéné.

9. Procédé selon la revendication 1, caractérisé en ce que la concentration volumique en agent d'extraction est comprise entre 5 et 100 %.

10. Procédé selon l'une quelconque des revendications 1 à 9, caractérisé en ce que :

— dans une première étape, dans le but de récupérer les terres rares, on met en contact la solution aqueuse de chlorures d'uranium, de thorium, de terres rares avec une phase organique constituée d'un diluant et d'un agent d'extraction, de façon à extraire en phase organique les chlorures d'uranium, de thorium et à laisser en phase organique les chlorures de terres rares : ledit agent d'extraction étant choisi parmi les phosphonates, les phosphinates, les oxydes de phosphine seuls, en mélange d'entre eux, ou en mélange avec des phosphates organiques neutres,

— dans une deuxième étape, dans le but de récupérer le thorium, on met en contact la phase organique issue de la première étape avec de l'eau ou une solution d'acide chlorhydrique, de façon à extraire le thorium en solution aqueuse et à laisser l'uranium en solution organique,

— dans une troisième étape, dans le but de récupérer l'uranium, on met en contact la phase organique issue de la deuxième étape avec de l'eau ou une solution aqueuse de carbonate alcalin, de façon à extraire l'uranium en solution aqueuse.

11. Procédé selon la revendication 10 caractérisé en ce que lorsque la solution contient du fer, la phase organique issue de la première étape est lavée avec une solution acide nitrique de concentration comprise entre 1 et 4N afin d'éliminer le fer en solution aqueuse.

— la deuxième étape, dans le but de récupérer le thorium est réalisée par mise en contact de la solution organique lavée et débarrassée du fer avec de l'acide nitrique de concentration inférieure ou égale à 0,1M,

— la troisième étape, dans le but de récupérer l'uranium est réalisée par mise en contact de la solution organique issue de la deuxième étape avec une solution de carbonate alcalin, de façon à extraire l'uranium en solution aqueuse.

12. Procédé selon la revendication 10 caractérisé en ce que, dans la deuxième étape, la solution d'acide chlorhydrique a une concentration inférieure ou égale à 0,1M.

13. Procédé selon la revendication 10 caractérisé en ce que, dans la troisième étape, la solution aqueuse de carbonate alcalin a une concentration comprise entre 0,5 et 2M.

14. Procédé selon la revendication 10 caractérisé en ce que à la suite de la troisième étape, l'agent d'extraction est recyclé dans la première étape et dans la deuxième étape.

15. Procédé selon l'une quelconque des revendications 1 à 9, caractérisé en ce que :

— dans une première étape, dans le but de séparer d'un côté les terres rares-thorium et d'un autre côté l'uranium, on met en contact la solution aqueuse de chlorures d'uranium, de thorium, de terres rares avec une phase organique constituée d'un diluant et d'un agent d'extraction, de façon à extraire en phase organique les chlorures d'uranium et à laisser en phase aqueuse les chlorures de thorium et de terres rares : ledit agent d'extraction étant choisi parmi les phosphates organiques neutres, les phosphonates, les phosphinates et les oxydes de phosphine seuls ou en mélange,

— dans une deuxième étape, dans le but de récupérer l'uranium, on met en contact la phase organique issue de la première étape avec de l'eau ou une solution de carbonate alcalin, de façon à extraire l'uranium en solution aqueuse,

— dans une troisième étape, dans le but de récupérer les terres rares, on met en contact la phase aqueuse issue de la première étape contenant le thorium et les terres rares avec une phase organique constituée d'un diluant et d'un agent d'extraction, de façon à extraire en phase organique le thorium et à laisser en phase aqueuse les terres rares : ledit agent d'extraction étant choisi parmi les phosphonates, les phosphinates, les oxydes de phosphine, seuls, en mélange entre eux ou en mélange avec des phosphates organiques neutres,

— dans une quatrième étape, dans le but de récupérer le thorium, on met en contact la phase organique issue de la troisième étape avec une solution chlorhydrique, de façon à extraire le thorium en solution aqueuse.

16. Procédé selon la revendication 15 caractérisé en ce que lorsque la solution contient du fer, la phase organique issue de la première étape est lavée avec une solution d'acide nitrique de concentration comprise entre 1 et 4N afin d'éliminer le fer en solution aqueuse, la deuxième étape, dans le but de récupérer l'uranium est réalisée par mise en contact de la solution organique lavée et débarrassée de fer avec une solution de carbonate alcalin.

17. Procédé selon les revendications 15 et 16, caractérisé en ce que dans la deuxième étape, la solution aqueuse de carbonate alcalin a une concentration comprise entre 0,5 et 2M.

18. Procédé selon la revendication 15 caractérisé en ce que dans la quatrième étape, la solution chlorhydrique a une concentration inférieure ou égale à 0,1M.

19. Procédé selon la revendication 15 caractérisé en ce que la solution organique issue de la troisième étape est recyclée vers la première étape et que la solution organique issue de la cinquième étape est recyclée vers la quatrième étape.

**Claims**

1. Process for the separation and recovery of uranium, thorium, the rare earths, and optionally iron, by liquid-liquid extraction between an aqueous phase containing the salts of these metals and an organic phase, which process is characterised in that uranium, thorium and the rare earths are isolated from an aqueous solution of chlorides of uranium, thorium, the rare earths and optionally iron, which contains at least 30 % by weight of the rare earths and has an acidity lower than 2 N and a total concentration, expressed as oxides of uranium, thorium and rare earths, of at least 50 g/l by contacting the said aqueous solution with an organic phase containing an extracting agent which consists of at least one neutral organophosphorus compound, optionally dissolved in a diluent, according to a process which consists :

— either, in a first step, in extracting the uranium and thorium chlorides into an organic phase and leaving the rare-earth chlorides in an aqueous phase : the said extracting agent being chosen from phosphonates, phosphinates and phosphine oxides by themselves, mixed with each other, or mixed with neutral organic phosphates ; and then, in another step, in isolating the thorium and uranium from the organic phase,

— or, in a first step, in extracting the uranium chlorides into an organic phase and leaving the rare-earth and thorium chlorides in an aqueous phase : the said extracting agent being chosen from neutral organic phosphates, phosphonates, phosphinates and phosphine oxides by themselves or mixed ; and then, in another step, in extracting the thorium chlorides into an organic phase and leaving the rare-earth chlorides in an aqueous phase : the said extracting agent being chosen from phosphonates, phosphinates and phosphine oxides by themselves, mixed with each other or mixed with neutral organic phosphates.

2. Process according to Claim 1, characterised in that the aqueous solution of chlorides of uranium, thorium, the rare earths and optionally iron, has an acidity lower than 1 N.

3. Process according to Claim 1, characterised in that the aqueous solution of chlorides of uranium, thorium, the rare earths and optionally iron has a concentration of between 50 g/l and 600 g/l, expressed as oxides of uranium, thorium, and the rare earths.

4. Process according to Claim 1, characterised in that the extracting agent is chosen from at least one of the following classes of neutral organophosphorus agents :

Neutral organic phosphates 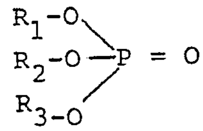

Phosphonates 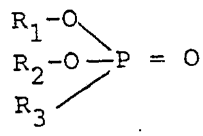

Phosphinates 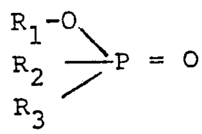

Phosphine oxides 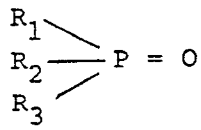

in which $R_1$, $R_2$ and $R_3$ denote aromatic and/or aliphatic hydrocarbon radicals containing from 1 to 18 carbon atoms and in which at least one group R contains at least 4 carbon atoms.

5. Process according to Claim 4, characterised in that the radicals $R_1$, $R_2$ and $R_3$ denote aromatic and/or aliphatic hydrocarbon radicals in which at least one group R contains from 4 to 15 carbon atoms.

6. Process according to Claim 4, characterised in that the organophosphorus compounds are chosen from phosphonates, phosphinates and phosphine oxides.

7. Process according to Claims 4 to 6, characterised in that the neutral organophosphorus compound is chosen from tri-n-butyl phosphate (TBP), triisobutyl phosphate (TIBP), dibutyl butylphosphonate (DBBP), di-2-ethylhexyl 2-ethylhexylphosphonate (DEHEHP), and trioctylphosphine oxide (TOPO).

8. Process according to Claim 1, characterized in that the diluent is chosen from the solvents for organophosphorus compounds, such as an aliphatic hydrocarbon, a petroleum cut of the kerosene or Solvesso type, an aromatic hydrocarbon, or a halogenated aliphatic hydrocarbon.

9. Process according to Claim 1, characterised in that the volume concentration of extracting agent is between 5 and 100 %.

10. Process according to any one of Claims 1 to 9, characterised in that :

— in order to recover the rare earths, the aqueous solution of chlorides of uranium, thorium and the rare earths is contacted, in a first step, with an organic phase consisting of a diluent and an extracting agent, so as to extract the uranium and thorium chlorides into an organic phase and to leave the rare-earth chlorides in an aqueous phase : the said extracting agent being chosen from phosphonates, phosphinates and phosphine oxides by themselves, mixed with each other or mixed with neutral organic phosphates,

— in order to recover the thorium, the organic phase originating from the first step is contacted, in a second step, with water or a hydrochloric acid solution, so as to extract the thorium into an aqueous solution and to leave the uranium in an organic solution,

— in order to recover the uranium, the organic phase originating from the second step is contacted, in a third step, with water or an aqueous alkali metal carbonate solution, so as to extract the uranium into an aqueous solution.

11. Process according to Claim 10, characterised in that, when the solution contains iron, the organic phase originating from the first step is washed with a nitric acid solution at a concentration of between 1 and 4 N in order to remove the iron as an aqueous solution,

— in order to recover the thorium, the second step is carried out by contracting the organic solution which has been washed and freed from iron, with nitric acid at a concentration not exceeding 0.1 M,

— in order to recover the uranium, the third step is carried out by contracting the organic solution originating from the second step with an alkali metal carbonate solution, so as to extract the uranium into an aqueous solution.

12. Process according to Claim 10, characterised in that, in the second step, the hydrochloric acid solution has a concentration not exceeding 0.1 M.

13. Process according to Claim 10, characterised in that, in the third step, the aqueous alkali metal carbonate solution has a concentration of between 0.5 and 2 M.

14. Process according to Claim 10, characterised in that, after the third step, the extracting agent is recycled into the first step and into the second step.

15. Process according to any one of Claims 1 to 9, characterised in that :

— in order to isolate, on the one hand, the rare earths and thorium and, on the other hand, uranium, the aqueous solution of chlorides of uranium, thorium, and of the rare earths is contacted, in a first step, with an organic phase consisting of a diluent and an extracting agent, so as to extract the uranium chlorides into an organic phase and to leave the thorium and rare earth chlorides in an aqueous phase : the said extracting agent being chosen from neutral organic phosphates, phosphonates, phosphinates and phosphine oxides by themselves or as as mixture,

— in order to recover the uranium, the organic phase originating from the first step is contacted, in a second step, with water or an alkali metal carbonate solution, so as to extract the uranium into an aqueous solution,

— in order to recover the rare earths, the aqueous phase originating from the first step and containing thorium and the rare earths is contacted, in a third step, with an organic phase consisting of a diluent and an extracting agent, so as to extract the thorium into an organic phase and to leave the rare earths in an aqueous phase : the said extracting agent being chosen from phosphonates, phosphinates and phosphine oxides by themselves, mixed with each other or mixed with neutral organic phosphates,

— in order to recover the thorium, the organic phase originating from the third step is contacted, in a fourth step, with a hydrochloric acid solution, so as to extract the thorium into an aqueous solution.

16. Process according to Claim 15, characterised in that when the solution contains iron, the organic phase originating from the first step is washed with a nitric acid solution at a concentration of between 1 and 4 N in order to remove the iron as an aqueous solution, and, in order to recover the uranium, the second step is carried out by bringing the organic solution which has been washed and freed from iron into contact with an alkali metal carbonate solution.

17. Process according to Claims 15 and 16, characterised in that, in the second step, the aqueous alkali metal carbonate solution has a concentration of between 0.5 and 2 M.

18. Process according to Claim 15, characterised in that, in the fourth step, the hydrochloric acid solution has a concentration not exceeding 0.1 M.

19. Process according to Claim 15, characterised in that the organic solution originating from the third step is recycled into the first step and that the organic solution originating from the fifth step is recycled into the fourth step.

**Patentansprüche**

1. Verfahren zur Abtrennung und Wiedergewinnung von Uran, Thorium, Seltenen Erden und gegebenenfalls Eisen durch Flüssig Flüssig-Extraktion zwischen einer wässrigen Phase, die die Salze dieser Metalle enthält, und einer organischen Phase, dadurch gekennzeichnet, daß man das Uran, das Thorium und die Seltenen Erden aus einer wässrigen Lösung von Chloriden von Uran, Thorium und seltenen Erden und gegebenenfalls Eisen abtrennt, die mindestens 30 Gew.% seltene Erden enthält, eine Acidität unter 2 N und eine Gesamtkonzentration, ausgedrückt als Uran-, Thorium- und Seltenerdoxide von mindestens 50 g/l besitzt, indem man die genannte wässrige Lösung mit einer organischen Phase in Kontakt bringt, die ein Extraktionsmittel enthält, das aus mindestens einer neutralen Organophosphorverbindung, gegebenenfalls in einem Lösungsmittel gelöst, besteht, nach einem Verfahren, das umfaßt :

— entweder in einer ersten Stufe die Extraktion der Uran- und Thoriumchloride in die organische Phase und Belassen der Seltenerdchloride in wässriger Phase, wobei das Extraktionsmittel unter den Phosphonaten, Phosphinaten und Phosphinoxiden allein, Mischungen dieser Stoffe untereinander, oder Mischungen dieser Stoffe mit neutralen organischen Phosphaten ausgewählt wird, und dann in einem weiteren Schritt die Abtrennung des Thoriums und des Urans aus der organischen Phase,

— oder in einer ersten Stufe die Extraktion der Uranchloride in die organische Phase und Belassen der Seltenerd- und Thoriumchloride in wässriger Phase, wobei das Extraktionsmittel unter den neutralen organischen Phosphaten, den Phosphonaten, Phosphinaten und Phosphinoxiden allein oder ihren Mischungen ausgewählt wird, dann in einer weiteren Stufe Extraktion der Thoriumchloride in die organische Phase und Belassen der Seltenerdchloride in wässriger Phase, wobei das Extraktionsmittel ausgewählt wird unter den Phosphonaten, Phosphinaten, Phosphinoxiden allein, ihren Mischungen untereinander oder ihren Mischungen mit neutralen organischen Phosphaten.

2. Verfahren nach Anspruch 1, dadurch gekennzeichnet, daß die wässrige Lösung von Uran-, Thorium-, Seltenerd- und gegebenenfalls Eisenchloriden eine Acidität unter 1 N aufweist.

3. Verfahren nach Anspruch 1, dadurch gekennzeichnet, daß die wässrige Lösung von Uran-, Thorium-, Seltenerd- und gegebenenfalls Eisenchloriden eine Konzentration zwischen 50 g/l und 600 g/l aufweist, ausgedrückt als Uran-, Thorium- und Seltenerdoxide.

4. Verfahren nach Anspruch 1, dadurch gekennzeichnet, daß das Extraktionsmittel aus wenigstens einer der folgenden Klassen von neutralen Organophosphorverbindungen ausgewählt wird :

neutrale organische Phosphate 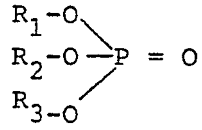

Phosphonate 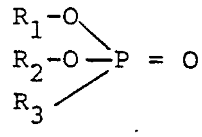

Phosphinate 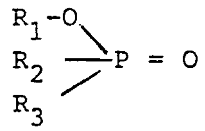

Phosphinoxide 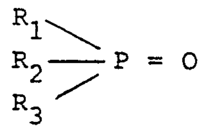

in denen $R_1$, $R_2$ und $R_3$ aromatische und/oder aliphatische Kohlenwasserstoffreste mit 1 bis 18 Kohlenstoffatomen bedeuten und in denen mindestens eine Gruppe R mindestens 4 Kohlenstoffatome enthält.

5. Verfahren nach Anspruch 4, dadurch gekennzeichnet, daß die Reste $R_1$, $R_2$ und $R_3$ aromatische und/oder aliphatische Kohlenwasserstoffreste sind, in denen mindestens eine Gruppe R 4 bis 15 Kohlenstoffatome enthält.

6. Verfahren nach Anspruch 4, dadurch gekennzeichnet, daß die Organophosphorverbindungen ausgewählt werden unter den Phosphonaten, den Phosphinaten und den Phosphinoxiden.

7. Verfahren nach einem der Ansprüche 4 bis 6, dadurch gekennzeichnet, daß die neutrale Organophosphorverbindung ausgewählt wird unter Tri-n-butylphosphat (TBP), Tri-Isobutylphosphat (TIBP), Dibutylbutylphosphonat (DBBP), Di-2-ethylhexyl-2-ethylhexylphosphonat (DEHEHP) und Tri-Octylphosphinoxid (TOPO).

8. Verfahren nach Anspruch 1, dadurch gekennzeichnet, daß das Lösungsmittel für die Organosphosphorverbindungen ausgewählt wird unter den aliphatischen Kohlenwasserstoffen, Erdölfraktionen des Kerosin- oder Solvesso-Typs, den aromatischen Kohlenwasserstoffen und den halogenierten aliphatischen Kohlenwasserstoffen.

9. Verfahren nach Anspruch 1, dadurch gekennzeichnet, daß die Konzentration des Extraktionsmittels zwischen 5 und 100 vol.-% beträgt.

10. Verfahren nach einem der Ansprüche 1 bis 9, dadurch gekennzeichnet, daß :

— in einer ersten Stufe zur Gewinnung der Seltenen Erden die wässrige Lösung von Uran-, Thorium- und Seltenerdchloriden mit einer organischen, aus einem Lösungsmittel und einem Extraktionsmittel bestehenden Phase in Kontakt gebracht wird, um die Uran- und Thoriumchloride als organische Phase zu extrahieren und die Seltenerdchloride in der wässrigen Phase zu belassen, wobei das Extraktionsmittel unter den Phosphonaten, Phosphinaten und Phosphinoxiden allein oder ihren Mischungen untereinander oder ihren Mischungen mit neutralen organischen Phosphaten ausgewählt wird,

— in einer zweiten Stufe zur Gewinnung des Thoriums die organische Phase aus der ersten Stufe mit Wasser oder einer Lösung von Chlorwasserstoffsäure in der Weise in Kontakt gebracht wird, daß das Thorium als wässrige Lösung extrahiert und das Uran in der organischen Lösung belassen wird,

— in einer dritten Stufe zur Gewinnung des Urans die organische Phase aus der zweiten Stufe mit Wasser oder einer wässrigen Lösung eines Alkalicarbonats in der Weise in Berührung gebracht wird, daß das Uran als wässrige Lösung extrahiert wird.

11. Verfahren nach Anspruch 10, dadurch gekennzeichnet, daß, wenn die Lösung Eisen enthält, die organische Phase aus der ersten Stufe mit einer Lösung von Salpetersäure einer Konzentration zwischen 1 und 4 N gewaschen wird, um das Eisen als wässrige Lösung zu entfernen,

— die zweite Stufe zur Gewinnung des Thoriums in der Weise durchgeführt wird, daß die gewaschene, vom Eisen befreite organische Lösung mit Salpetersäure einer Konzentration von höchstens 0,1 M in Kontakt gebracht wird,

— und eine dritte Stufe zur Gewinnung des Urans in der Weise durchgeführt wird, daß die organische Lösung aus der zweiten Stufe mit einer Lösung eines Alkalicarbonats zur Extraktion des Urans als wässrige Lösung in Berührung gebracht wird.

12. Verfahren nach Anspruch 10, dadurch gekennzeichnet, daß die Chlorwasserstoffsäurelösung in der zweiten Stufe eine Konzentration von höchstens 0,1 M aufweist.

13. Verfahren nach Anspruch 10, dadurch gekennzeichnet, daß die wässrige Alkalicarbonatlösung in der dritten Stufe eine Konzentration zwischen 0,5 und 2 M aufweist.

14. Verfahren nach Anspruch 10, dadurch gekennzeichnet, daß das Extraktionsmittel nach der dritten Stufe in die erste und zweite Stufe zurückgeführt wird.

15. Verfahren nach einem der Ansprüche 1 bis 9, dadurch gekennzeichnet, daß :

— in einer ersten Stufe zur Trennung der Seltenen Erden und des Thoriums einerseits und des Urans andererseits die wässrige Lösung von Uran-, Thorium- und Seltenerdchloriden mit einer organischen, aus einem Lösungsmittel und einem Extraktionsmittel bestehenden Phase in Berührung gebracht wird, um die Uranchloride als organische Phase zu extrahieren und die Thorium- und Seltenerdchloride in der wässrigen Phase zu belassen, wobei das Extraktionsmittel unter den neutralen organischen Phosphaten, den Phosphonaten, den Phosphinaten und den Phosphinoxiden allein oder ihren Mischungen ausgewählt wird,

— in einer zweiten Stufe zur Gewinnung des Urans die organische Phase aus der ersten Stufe mit Wasser oder einer Alkalicarbonatlösung in Berührung gebracht wird, um das Uran als wässrige Lösung zu extrahieren,

— in einer dritten Stufe zur Gewinnung der Seltenen Erden, die wässrige Phase aus der ersten Stufe, die das Thorium und die Seltenen Erden enthält, mit einer organischen aus einem Lösungsmittel und einem Extraktionsmittel bestehenden Phase in Berührung gebracht wird, um das Thorium als organische Phase zu extrahieren und die Seltenen Erden in der wässrigen Phase zu belassen, wobei das Extraktionsmittel unter den Phosphonaten, den Phosphinaten, den Phospinoxiden allein, ihren Gemischen untereinander oder ihren Gemischen mit neutralen organischen Phosphaten ausgewählt wird,

— in einer vierten Stufe zur Gewinnung des Thoriums die organische Phase aus der dritten Stufe mit einer Chlorwasserstofflösung in Berührung gebracht wird, um das Thorium als wässrige Lösung zu extrahieren.

16. Verfahren nach Anspruch 15, dadurch gekennzeichnet, daß, wenn die Lösung Eisen enthält, die organische Phase aus der ersten Stufe mit einer Salpetersäurelösung einer Konzentration zwischen 1 und 4 N gewaschen wird, um das Eisen als wässrige Lösung zu entfernen, und eine zweite Stufe zur Gewinnung des Urans in der Weise durchgeführt wird, daß die gewaschene, eisenfreie organische Lösung mit einer Alkalicarbonatlösung in Berührung gebracht wird.

17. Verfahren nach einem der Ansprüche 15 oder 16, dadurch gekennzeichnet, daß in der zweiten Stufe die wässrige Alkalicarbonatlösung eine Konzentration zwischen 0,5 und 2 M aufweist.

18. Verfahren nach Anspruch 15, dadurch gekennzeichnet, daß in der vierten Stufe die Chlorwasserstofflösung eine Konzentration von höchstens 0,1 M aufweist.

19. Verfahren nach Anspruch 15, dadurch gekennzeichnet, daß die organische Lösung aus der dritten Stufe zur ersten Stufe zurückgeführt wird, und daß die organische Lösung aus der fünften Stufe zur vierten Stufe zurückgeführt wird.